# EUROPÄISCHE PATENTSCHRIFT

(11) **EP 1 940 575 B1**
(45) Veröffentlichungstag und Bekanntmachung des Hinweises auf die Patenterteilung: **08.05.2013**
(21) Anmeldenummer: 06828837.2
(22) Anmeldetag: 19.10.2006
(51) Int. Cl.: B22F 3/105, B29C 67/00, A61C 13/00

(54) **SCHICHTWEISES HERSTELLUNGSVERFAHREN MIT KORNGRÖßENBEEINFLUSSUNG**
PARTICLE SIZE-INFLUENCING LAYER-BY-LAYER MANUFACTURING METHOD
PROCEDE DE FABRICATION PAR COUCHES AVEC COMMANDE DE GRANULOMETRIE

(30) Priorität: 20.10.2005 DE 102005050665
(43) Veröffentlichungstag der Anmeldung: 09.07.2008
(73) Patentinhaber: BEGO Medical GmbH, 28359 Bremen (DE)
(72) Erfinder: UCKELMANN, Ingo, 28309 Bremen (DE)
(74) Vertreter: Eisenführ, Speiser & Partner
(86) Internationale Anmeldenummer: PCT/EP2006/010090
(87) Internationale Veröffentlichungsnummer: WO 2007/045471

(56) Entgegenhaltungen:
- EP-A- 1 358 855
- DE-A1- 10 320 085
- DE-A1- 19 538 257
- DE-C1- 4 309 524

## Beschreibung

Die Erfindung betrifft ein Verfahren zum schichtweisen Herstellen eines Produkts, umfassend die Schritte:
a. Auftragen einer Schicht eines aushärtbaren Materials, wobei beispielsweise die Verfahrensparameter Schichtdicke, Schichtmaterial einstellbar sind,
b. selektives Aushärten von vorbestimmten Bereichen der aufgetragenen Schicht anhand der geometrischen Daten des Produkts, wobei beispielsweise die Verfahrensparameter für Art und Höhe des Energieeintrags einstellbar sind,
c. Wiederholen der Schritte a) und b) bis die Geometrie des Produkts als ausgehärtetes Material erstellt wurde,
d. Entfernen des nicht ausgehärteten Materials.

Ein weiterer Aspekt der Erfindung ist eine Vorrichtung zur Durchführung eines solchen Verfahrens und die Nutzung des Verfahrens und der Vorrichtung zur Herstellung dentaler Produkte.

Verfahren der eingangs genannten Art werden in vielen Anwendungen genutzt, um mit möglichst geringem Aufwand in der Fertigungsvorbereitung und in möglichst kurzer Zeit geometrisch komplexe Produkte herzustellen. Ein typisches Anwendungsgebiet ist das sogenannte "Rapid Prototyping", bei dem aus Produktgeometriedaten, welche die dreidimensionale Form des Produkts beschreiben, direkt ein Produktmodell hergestellt wird, welches der Anschauung und Erprobung dienen kann.

Verfahren der eingangs genannten Art können beispielsweise mit einem pulverförmigen oder in anderer Weise schüttfähigen Material durchgeführt werden, welches durch eine chemische Vernetzungsreaktion oder einen physikalischen Verbindungsvorgang, beispielsweise eine Verschmelzung oder Sinterung, ausgehärtet werden kann und auf diese Weise eine belastbare, dreidimensionale Struktur erzeugen kann. In anderen Anwendungsfällen kann auch ein flüssiges, aushärtbares Material verwendet werden, das beispielsweise durch Photopolymerisation mittels eines Laserstrahls selektiv ausgehärtet werden kann.

Ein übliches Verfahren der eingangs genannten Art besteht darin, dass das schüttfähige oder gießbare Material auf eine Platte in einer dünnen Schicht aufgetragen wird und dann bestimmte Bereiche dieser Schicht ausgehärtet werden, indem ein Laserstrahl über diese Bereich geführt wird und so die Aushärtung, beispielsweise die Verschmelzung, Sinterung oder Photopolymerisation, herbeiführt.

Nachfolgend wird eine zweite dünne Schicht auf die zuvor aufgetragene dünne Schicht aufgetragen, beispielsweise indem eine dünne Pulverschicht zusätzlich aufgetragen wird oder die Platte um einen bestimmten, kleinen Weganteil in ein Bad des flüssigen, aushärtbaren Materials abgesenkt wird. Wiederum werden von dieser zweiten dünnen Schicht selektiv bestimmte Bereiche ausgehärtet. Diese Verfahrensschritte werden in zeitlicher Folge vielfach wiederholt, bis auf diese Weise das Produkt als schichtweise ausgehärtetes Modell erstellt worden ist.

Ein Verfahren der zuvor beschriebenen Art zum Herstellen von Produkten durch Freiform-Lasersintern ist in EP 1 358 855 beschrieben. Eine Verfahrensfortbildung mit einer Doppelbelichtung ist in EP 1 568 472 beschrieben.

DE 4 309 524 offenbart ein Verfahren zum schichtweisen Herstellen eines Produkts, wobei ein Verfahrensparameter während des Herstellvorgangs verändert wird, um die Festigheit des hergestelleten Produkts zu beimflussen.

Verfahren der zuvor beschriebenen Art eignen sich für die Herstellung mechanisch belastbarer Produkte. Insbesondere bei der Herstellung metallischer Produkte können mit dem eingangs beschriebenen Verfahren zufriedenstellende mechanische Eigenschaften des Produkts erzielt werden.

Es hat sich jedoch gezeigt, dass das eingangs genannte Herstellungsverfahren insbesondere für hochbelastete Produkte mit komplexen Geometrien noch weiter verbesserungsfähig ist. So wird insbesondere bei solchen Produkten gelegentlich an exponierten oder hochbeanspruchten Stellen eine Überbeanspruchung des Materials beobachtet. Dies kann zu verringerter Belastbarkeit des Produkts oder sogar zum lokalen Versagen des Produkts führen. Desweiteren ist es oftmals für bestimmte Materialbereiche im Produkt selbst oder in Fertigungshilfsbereichen, beispielsweise Stützen, erwünscht, die Materialfestigkeit zu verringern, um Sollbruchstellen zu erzielen. Dies kann mit den vorbekannten Verfahren nicht reproduzierbar erreicht werden.

Der Erfindung liegt die Aufgabe zugrunde, ein Verfahren bereitzustellen, mit dem Produkte mit komplexen Geometrien und variabel gestalteten Festigkeiten, insbesondere mit lokal hochbelastbaren Bereichen, in kleinen Stückzahlen, insbesondere in Einzelfertigung, wirtschaftlich hergestellt werden können.

Diese Aufgabe wird erfindungsgemäß mit einem verfahren gemäß dem Anspruch 1 gelöst.

Der Erfindung liegt die entscheidende Erkenntnis zugrunde, dass die lokal unzureichenden Materialeigenschaften von Produkten, die mit dem eingangs genannten Verfahren hergestellt worden sind, häufig darauf zurückzuführen sind, dass aufgrund lokal begrenzter Einflüsse in einem bestimmten Bereich oder mehreren bestimmten Bereichen des Produkts bei der Herstellung des Produkts eine ungünstige Korngröße erzeugt wird. Dies führt dazu, dass das Produkt an den entsprechenden Stellen nicht die gewünschten Materialeigenschaften aufweist, sondern durch andere, unerwünschte Materialeigenschaften charakterisiert ist, die den in dem entsprechenden Bereich gewünschten Materialeigenschaften nicht gerecht werden.

Auf dieser Erkenntnis aufbauend beruht die Erfindung darin, einen oder mehrere Verfahrensparameter während des Herstellvorgangs so zu verändern, dass die Korngröße dahingehend beeinflusst wird, dass eine gewünschte Größe in dem entsprechenden Bereich erzielt wird. Auf diese Weise kann beispielsweise eine homogene Materialstruktur mit gleichmäßiger Korngröße in allen Bereichen erzielt werden oder es können bestimmte Bereiche ausgebildet werden, die gegenüber anderen Bereichen eine unterschiedliche Korngröße aufweisen.

Unter der Korngröße soll in diesem Zusammenhang die Größe der Kristalle eines metallischen Produkts verstanden werden, die üblicherweise anhand von geätzten Schliffen mikroskopisch ermittelt wird.

Es ist bevorzugt, dass der zumindest eine Verfahrensparameter in Abhängigkeit der geometrischen Daten des Produkts verändert wird. Es hat sich gezeigt, dass eine ungünstige Ausbildung der Korngröße oder Komgrenzenobertlächengröße häufig von der geometrischen Gestaltung des Produkts abhängt. So wird eine solche unerwünschte Komgrößenausbiidung häufig im Bereich von Oberflächen, exponierten Vorsprüngen oder Ähnlichem des Produkts beobachtet. Die vorgenannten Verfahrensfortbildung ermöglicht es, dass ein oder mehrere Verfahrensparameter gezielt in solchen Bereichen des Produkts verändert werden, um einer zu erwartenden oder beobachteten unerwünschten Korngrößenänderung entgegenzutreten. Auf diese Weise kann beispielsweise erreicht werden, dass das Produkt in zwei oder mehr Bereichen, die aufgrund unterschiedlicher Bearbeitungsbedingungen, beispielsweise unterschiedlicher Wärmeleitungen, auch unterschiedliche Korngrößen aufweisen würden, wenn die Verfahrensparameter während der gesamten Bearbeitung konstant gehalten würden, eine gleichmäßige Korngröße aufweist, indem gezielt ein oder mehrere Verfahrensparameter geändert werden. Dabei kann diese Änderung anhand der geometrischen Daten des Produkts gezielt ortsaufgelöst eingestellt werden und auf diese Weise automatisch gesteuert werden.

Des Weiteren kann diese Verfahrensfortbildung genutzt werden, um gezielt bestimmte geometrische Bereiche des Produkts hinsichtlich ihrer Korngröße zu verändern, beispielsweise um im Bereich von Oberflächen eine andere Korngröße zu erzielen als im inneren Bereich des Produkts. So kann beispielsweise eine besonders hohe Härte, Festigkeit, besonders günstige Bearbeitbarkeit oder besonders günstige Verklebbarkeit des Produkts im Oberflächenbereich erzielt werden.

Weiterhin ist es vorteilhaft, wenn das Material in einem ersten Bereich des Produkts mit einer anderen Schichtdicke aufgetragen wird als in einem zweiten Bereich, um die Korngröße im ersten Bereich gegenüber dem zweiten Bereich zu beeinflussen. Es hat sich gezeigt, dass die Schichtdicke, d.h. die Höhe, mit der eine einzelne Schicht des aushärtbaren Materials aufgetragen wird, einen wesentlichen Einfluss auf die Korngröße hat. Der Zusammenhang besteht dahingehend, dass bei einer Erhöhung der Schichtdicke eine Vergrößerung der Körner im Bereich dieser Schicht erzielt wird. Dieser Zusammenhang wird nach dieser Fortbildung dazu genutzt, um durch Veränderung des Verfahrensparameters Schichtdicke die Korngröße zu beeinflussen, d.h. die Schichtdicke zu verringern, wenn die Korngröße verringert werden soll und umgekehrt. Dies erlaubt eine individuelle Beeinflussung der Korngröße. So kann eine einzelne Schicht einerseits mit einer einheitlichen Schichtdicke aufgetragen werden. Es können auch Verfahrensfortbildungen erfolgen, bei denen eine einzelne Schicht in zwei oder mehr unterschiedlichen Schichtdicken an verschiedenen Orten der Schicht aufgetragen wird. Alternativ hierzu kann ein auszuhärtender Bereich erst nach mehrmaligem Schichtauftrag ausgehärtet werden, um auf diese Weise eine erhöhte Schichtdicke in diesem Bereich zu erzielen und zugleich zu ermöglichen, dass andere auszuhärtende Bereiche zuvor mit geringerer Schichtdicke ausgehärtet werden.

Es ist weiterhin bevorzugt, dass die Aushärtung des Materials mittels eines Laser- oder Elektronenstrahls erzielt wird, der über die auszuhärtenden Bereiche geführt wird und die Intensität der Strahlung in einem ersten Bereich des Produkts gegenüber einem zweiten Bereich verändert wird, um die Korngröße in dem ersten Bereich gegenüber dem zweiten Bereich zu beeinflussen. Die Aushärtung mit einem Laser- oder Elektronenstrahl erlaubt eine sehr variable Verfahrenssteuerung und die Herstellung geometrisch präziser Produkte. Die Intensität der Strahlung hat sich als wichtiger Einflussfaktor auf die Korngröße herausgestellt und eine Variation des Parameters Strahlungsintensität ermöglicht daher eine Beeinflussung dieser Größe. Diese Verfahrensfortbildung hat den entscheidenden Vorteil, dass die Intensität der Strahlung zeitlich und örtlich hoch aufgelöst verändert werden kann und auf diese Weise eine sehr exakte Prozessführung mit entsprechend differenzierter und exakter Beeinflussung der Korngröße ermöglicht wird.

Dabei ist es insbesondere bevorzugt, wenn die Intensität der Strahlung verändert wird, indem die Strahlungsquellenleistung, der Durchmesser des Strahls im Fokus und/oder die Verfahrgeschwindigkeit zwischen Strahl und auszuhärtendem Material verändert wird/werden. Der Durchmesser des Strahls im Fokus kann durch ein Linsensystem mit veränderbarer Brennweite in einfacher und schneller Weise beeinflusst werden. Die Verfahrgeschwindigkeit zwischen Strahl und auszuhärtendem Material kann entweder durch Ablenkung des Strahls, beispielsweise über Spiegel- oder Prismenelerriente oder mittels eines Motorantriebs, der das auszuhärtende Material relativ zum Strahl oder die Strahleinheit relativ zum auszuhärtenden Material bewegt, erzeugt werden. Diese Möglichkeiten erlauben ebenfalls eine einfache und gut steuerbare Variation der Verfahrgeschwindigkeit. Schließlich kann die Strahlungsquellenleistung beispielsweise durch erhöhte Energiezufuhr zur Strahlungsquelle oder Ein- und Ausblenden von Strahlteilern in den Strahl besonders schnell verändert werden und eignet sich daher in besonderer Weise zur Beeinflussung der Korngröße. Eine Erhöhung des Durchmessers des Strahls im Bearbeitungsbereich, insbesondere im Fokus, eine Verringerung der Strahlungsquellenleistung und/oder eine Erhöhung der Verfahrgeschwindigkeit bewirken dabei eine Verringerung der Intensität der Strahlung und umgekehrt.

Es ist besonders bevorzugt, wenn in einem ersten Bereich des Produkts mit höherer Wärmeleitung als in einem zweiten Bereich, insbesondere
- in einem ersten Bereich mit größerer Wandstärke des Produkts und/oder
- in einem ersten Bereich, der in Kontakt mit einer Platte steht, auf der das Bauteil aufgebaut wird, und/oder
- in einem ersten Bereich eines Überhangs des Produkts
zumindest ein Verfahrensparameter gegenüber dem zweiten Bereich verändert wird, um die Korngröße zu beeinflussen.

Insbesondere ist es dabei bevorzugt, wenn die Intensität der Strahlung und/oder die Schichtdicke im ersten Bereich erhöht wird, um die Korngröße im ersten Bereich konstant zu dem zweiten Bereich zu halten.

Es hat sich gezeigt, dass oftmals eine unerwünschte Veränderung der Korngröße in solchen Bereichen auftritt, in denen eine geänderte Wärmeleitung gegenüber anderen Bereichen besteht. Eine solche geänderte Wärmeleitung kann beispielsweise geometrisch bedingt sein, durch eine Veränderung der Materialeigenschaften hervorgerufen werden oder in Folge der Bearbeitungsreihenfolge der auszuhärtenden Bereiche bedingt sein. Eine hierdurch hervorgerufene Veränderung der Korngröße oder Korngrenzenoberflächen ist oftmals unerwünscht und führt zu nachteilhaften Produkteigenschaften. Insbesondere Bereiche mit größerer Wandstärke, Bereiche, die in Kontakt mit der Grundplatte stehen und Bereiche, in denen das Produkt einen Überhang, beispielsweise einen Vorsprung oder Ähnliches, aufweist, haben sich als besonders kritisch im Hinblick auf die Korngröße gezeigt.

Die Fortbildung besteht darin, einen oder mehrere Verfahrensparameter in den Bereichen mit geänderter Wärmeleitung zu verändern, um die unerwünschte Größenänderung zu kompensieren oder darüber hinaus eine Größenänderung in einer beabsichtigten Weise herbeizuführen. Auf diese Weise kann eine homogene Größe der Körner in dem gesamten Produkt erzielt werden oder es kann erreicht werden, dass in den Bereichen mit geänderter Wärmeleitung, die oftmals mit geometrisch exponierten und daher mechanisch besonders beanspruchten Bereichen des Produkts übereinstimmen, eine vorteilhafte Korngröße erzeugt wird, um in diesen Bereichen gewünschte, vorteilhafte Materialeigenschaften bereitzustellen. Das erfindungsgemäße Verfahren eignet sich in besonderer Weise, um in solchen Bereichen eine Konstanz der Korngröße zu erzielen, indem ein oder mehrere Verfahrensparameter in diesen Bereichen gegenüber anderen Bereichen während der Bearbeitung geändert werden.

Grundsätzlich kann das erfindungsgemäße Verfahren vorteilhaft eingesetzt werden, um einen oder mehrere Verfahrensparameter während des Herstellungsvorgangs zu verändern und auf diese Weise die Korngröße in allen Bereichen des Produkts etwa konstant zu halten.

Es ist in bestimmten Anwendungen aber besonders bevorzugt, wenn der zumindest eine Verfahrensparameter verändert wird, um die Korngröße in einem ersten Bereich des Produkts gegenüber dem zweiten Bereich zu verändern. Auf diese Weise kann eine an die Beanspruchungen der einzelnen Bereiche angepasste Korngröße erzeugt werden und auf diese Weise eine angepasste Materialeigenschaft für jeden Bereich des Produkts erzielt werden.

Es ist insbesondere bevorzugt, wenn im ersten Bereich die Schichtdicke erhöht wird und/oder die Intensität der Strahlung erhöht wird, um die Korngröße in einem ersten Bereich des Produkts gegenüber dem zweiten Bereich zu erhöhen. Es hat sich gezeigt, dass für eine Reihe gebräuchlicher, aushärtbarer Materialien eine Vergrößerung der Körner auftritt, wenn die Materialien mit einer erhöhten Schichtdicke aufgetragen werden und diese Schichtdicke dann selektiv ausgehärtet wird. Dabei kann eine Veränderung der Schichtdicke in allen Bereichen der Schicht oder in nur einzelnen Bereichen der Schicht erfolgen.

Es ist bei den zuvor beschriebenen Verfahren mit Veränderung des Verfahrensparameters der Intensität der Strahlung insbesondere bevorzugt, wenn die Intensität der Strahlung erhöht wird, indem die Strahlungsquellenleistung erhöht wird und/oder der Durchmesser des Strahls im Fokus und/oder die Verfahrgeschwindigkeit zwischen Strahl und auszuhärtendem Material verringert wird/werden, um die Korngröße in einem ersten Bereich des Produkts gegenüber dem zweiten Bereich zu erhöhen. Eine Veränderung dieser konkreten Verfahrensparameter führt isoliert oder in Kombination zur gewünschten Erhöhung der Intensität der Strahlung.

Es ist weiterhin bevorzugt, wenn der zumindest eine Verfahrensparameter verändert wird, um die Größe zumindest einer Fehlstelle zu verringern. In diesem Zusammenhang soll unter Korngröße auch Fehlstellengröße verstanden werden. Eine Fehlstelle kann in einem luftgefüllten Raum innerhalb eines Bauteils bestehen oder in einem lokal umgrenzten Bereich, der eine Verschmutzung, Legierungsverunreinigung oder Ähnliches beinhaltet. Solche Fehlstellen beeinflussen regelmäßig die Materialeigenschaften und diese Beeinflussung bewirkt in der Regel eine Verschlechterung der Materialeigenschaften, die umso ausgeprägter ist, je größer die Fehlstelle ist. Es ist daher wünschenswert, die Fehlstellengröße unterhalb einer bestimmten Maximalgröße zu halten, wenn man ein vorgegebenes Festigkeitssoll des Materials erzielen möchte. Umgekehrt kann es wünschenswert sein, Fehlstellen einer bestimmten Größenordnung oder darüber bereitzustellen, um sicherzustellen, dass ein gewünschtes Materialversagen bei einer vorgegebenen Sollbeanspruchung erfolgt.

Es hat sich gezeigt, dass durch Veränderung eines oder mehrerer Verfahrensparameter ein Einfluss auf die Fehlstellengröße möglich ist und folglicherweise die Fehlstellengröße unterhalb oder oberhalb einer bestimmten Schranke gesetzt werden kann, indem ein oder mehrere Verfahrensparameter gezielt verändert werden.

Dabei ist es besonders bevorzugt, wenn im ersten Bereich die Schichtdicke verringert wird und/oder die Strahlungsintensität und/oder die Verfahrgeschwindigkeit erhöht wird, um im ersten Bereich zu verhindern, dass sich Fehlstellen aus unlöslichen Schmelzeverunreinigungen, die in der Schmelze oder während des Abkühlens ausfallen, zu größeren Fehlstellen verbinden. Unlösliche Verunreinigungen der Schmelze fallen typischerweise bereits im schmelzflüssigen Materialzustand oder während des Abkühlens aus und können sich, wenn eine Beweglichkeit dieser Fehlstelle ermöglicht wird, miteinander verbinden und auf diese Weise größere Fehlstellen ausbilden. Dies ist oftmals nicht gewünscht, da hierdurch die Belastbarkeit des hergestellten Bauteils verringert wird und gemäß der erfindungsgemäßen Fortbildung wird die Beweglichkeit der Fehlstelle nicht oder nur für eine kurze Zeit ermöglicht, indem die Parameter gewählt werden, wie zuvor beschrieben.

Eine dem gegenüber stehende andere Fortbildung des erfindungsgemäßen Verfahrens besteht darin, dass im ersten Bereich die Schichtdicke erhöht wird und/oder die Strahlungsintensität und/oder die Verfahrgeschwindigkeit verringert wird, um im ersten Bereich zu verhindern, dass sich Fehlstellen aus löslichen Schmelzeverunreinigungen zu größeren Fehlstellen verbinden. Lösliche Schmelzverunreinigungen können durch eine Verlängerung des schmelzflüssigen Zustands über einen größeren Materialbereich verteilt werden, wodurch der Einfluss der Verunreinigung reduziert wird, indem die Konzentration der Verunreinigung reduziert wird. Diese Verlängerung des schmelzflüssigen Zustands kann erreicht werden, indem die Parameter variiert werden, wie zuvor beschrieben.

Aus den beiden vorstehenden Fortbildungsvarianten ist ersichtlich, dass materialspezifisch in Abhängigkeit der Art der Verunreinigung eine Parametervariation vorgenommen werden muss, um das gewünschte Ergebnis im Hinblick auf die Größe der Fehlstellen zu erzielen. Diesbezüglich ist eine vorhergehende Analyse der Art und Weise der Schmelzverunreinigung vorteilhaft. Zudem kann, aus analytischen oder durch Erfahrung gewonnenen Werten, eine Parametervariation in bestimmten Bereichen des Bauteils vorgenommen werden, in denen erfahrungsgemäß bestimmte Arten von Schmelzeverunreinigung - löslich oder unlöslich - auftreten.

Ein weiterer Aspekt der Erfindung ist eine Vorrichtung zum schichtweisen Herstellen eines Produkts gemäß dem Anspruch 14.

Die erfindungsgemäße Vorrichtung ist insbesondere ausgebildet, um das erfindungsgemäße Verfahren auszuführen. Hinsichtlich der Details der den einzelnen Verfahrensschritten entsprechenden Vorrichtungsteile, deren Wirkungen und Vorteilen wird auf die vorangegangene Beschreibung verwiesen.

Die erfindungsgemäße Vorrichtung kann nach den Merkmalen der Ansprüche 14-19 fortgebildet werden. Zu diesen Fortbildungen wird hinsichtlich der Details, Wirkungsweise und Vorteile auf die den Vorrichtungsmerkmalen entsprechenden Verfahrensfortbildungen verwiesen, die zuvor beschrieben wurden.

Die erfindungsgemäße Vorrichtung eignet sich insbesondere zur Verwendung bei der Herstellung dentaler Produkte, insbesondere für teilweisen oder vollständigen Zahnersatzes. Ein solcher Zahnersatz kann einen fehlenden, erkrankten oder beschädigten Zahn vollständig ersetzen oder kann im Bereich beschädigter oder erkrankter Stellen eines Zahns an gesunde Teile des Zahns angesetzt werden und den Zahn hierdurch wieder in funktionaler und ästhetischer Hinsicht wiederherstellen. Die erfindungsgemäße Vorrichtung eignet sich zur Herstellung eines solchen Zahnersatzes in besonderer Weise, da einerseits eine hochindividuelle Fertigung auf Basis von beispielsweise mit einem Bilderfassungssystem ermittelten Geometriedaten erfolgen kann und andererseits eine an die Beanspruchungen des Zahnersatzes angepasste Korngröße eingestellt werden kann. So kann beispielsweise eine besonders günstige Haftung des Zahnersatzes an bestehenden Zahnresten oder eine besonders günstige Integration des Zahnersatzes in den Kieferknochen erreicht werden, indem die Oberfläche mit einer hierfür vorteilhaften Korngröße und Korngrenzenoberflächengröße ausgebildet wird. Weiterhin können die durch Reibung während des Kauvorgangs beanspruchten Flächen mit einer Korngröße versehen werden, die gegenüber diesen Reibungseinflüssen besonders unempfindlich ist. Schließlich kann das Innere des Zahnersatzes mit einer Korngröße bereitgestellt werden, die besonders geeignet ist, um die mechanischen Kaukräfte innerhalb des Zahnersatzteils zu übertragen. So können mit dem erfindungsgemäßen Verfahren die Korngrößen in einem Bereich zwischen 0,5 und 5 µm eingestellt werden.

Ein weiterer Aspekt der Erfindung ist ein Verfahren der zuvor beschriebenen Art zum Herstellen dentaler Produkte, insbesondere teilweisen oder vollständigen Zahnersatzes. Zu den Vorteilen dieser Verfahrensfortbildung wird auf die vorangehende Beschreibung der entsprechenden Verwendung der Vorrichtung verwiesen.

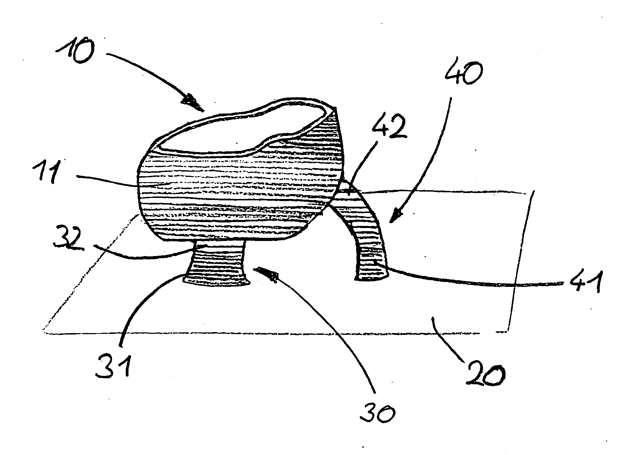

Eine derzeit bevorzugte Ausführungsform wird anhand der beiliegenden Figur beispielhaft erläutert. Die Figur zeigt ein auf einer Basisplatte 20 aufgebautes Dentalprodukt 10.

Das Dentalprodukt 10 ist mit der Basisplatte 20 über einen Aufbausteg 30 und eine Stütze 40 verbunden und hierdurch von der Basisplatte 20 beabstandet. Das Dentalprodukt 10 wird aus einer Vielzahl von Schichten 11 hergestellt, die aufeinanderfolgend aufgetragen und ausgehärtet werden.

Bevor das Dentalprodukt selbst durch schichtweises Aushärten des Ausgangsmaterials hergestellt wird, wird der Aufbausteg 30 ebenfalls durch schichtweises Aushärten erzeugt. Hierbei wird in dem Bereich, der an die Basisplatte angrenzt, ebenfalls mit sehr dünnen Schichten 31 gearbeitet. In dem Übergangsbereich zwischen dem Aufbausteg und dem Dentalprodukt wird die Schichthöhe der Schichten 32 jedoch gegenüber diesen dünnen Schichten verdreifacht, wodurch in diesem Bereich eine höhere Korngröße erzielt wird.

Auf diese Weise wird im Übergangsbereich eine Sollbruchstelle durch Korngrößenveränderung ausgebildet, die ein leichteres Abtrennen des Aufbaustegs vom Dentalprodukt erlaubt, ohne dass hierdurch die Gefahr bestünde, dass das Dentalprodukt beim Abtrennen beschädigt wird oder größere Teile des Aufbaustegs am Dentalprodukt verbleiben, was aufwendige Nacharbeiten erfordern würde.

Das Dentalprodukt 10 wird weiterhin seitlich durch die Stütze 40 abgestützt, um den Kräften, die beim Schichtauftragen auftreten, entgegenzuwirken und einen unerwünschten geometrischen Verzug des Dentalprodukts zu verhindern. Oftmals sind mehrere solcher Stützen 40 erforderlich, um das Dentalprodukt oder filigrane Bestandteile des Dentalprodukts ausreichend mechanisch zu sichern.

Die Stütze 40 ist ebenfalls im Bereich 41, der an die Basisplatte 20 angrenzt, mit einer Vielzahl dünner Schichten aufgebaut. In dem Übergangsbereich 42, in dem die Stütze 40 an das Dentalprodukt 10 angrenzt und in das Dentalprodukt 10 übergeht, ist die Schichtdicke, ebenso wie beim Verbindungssteg 30, verdreifacht, wodurch in diesem Bereich eine erhöhte Korngröße erzielt wird. So wird eine Sollbruchstelle durch Korngrößenerhöhung hergestellt und eine leichte und gefahrlose Abtrennung der Stütze 40 von dem Dentalprodukt 10 ermöglicht.

## Patentansprüche

1. Verfahren zum schichtweisen Herstellen eines Produkts, umfassend die Schritte:
a. Auftragen einer Schicht eines aushärtbaren Materials, wobei beispielsweise die Verfahrensparameter Schichtdicke, Schichtmaterial einstellbar sind,
b. selektives Aushärten von vorbestimmten Bereichen der aufgetragenen Schicht anhand der geometrischen Daten des Produkts, wobei beispielsweise die Verfahrensparameter für Art und Höhe des Energieeintrags einstellbar sind,
c. Wiederholen der Schritte a) und b) bis die Geometrie des Produkts als ausgehärtetes Material erstellt wurde,
d. Entfernen des nicht ausgehärteten Materials,
**dadurch gekennzeichnet, dass** zumindest ein Verfahrensparameter während des Herstellvorgangs verändert wird, um die bei der Herstellung des Produkts erzeugte Korngröße in einem ersten Bereich des Produkts gegenüber einem zweiten Bereich des Produkts zu beeinflussen, wobei unter der Korngröße die Größe der Kristalle eines metallischen Produkts verstanden wird.

2. Verfahren nach Anspruch 1,
**dadurch gekennzeichnet, dass** der zumindest eine Verfahrensparameter in Abhängigkeit der geometrischen Daten des Produkts verändert wird.

3. Verfahren nach einem der vorhergehenden Ansprüche,
**dadurch gekennzeichnet, dass** das Material in einem ersten Bereich des Produkts mit einer anderen Schichtdicke aufgetragen wird als in einem zweiten Bereich, um die Korngröße im ersten Bereich gegenüber dem zweiten Bereich zu beeinflussen.

4. Verfahren nach einem der vorhergehenden Ansprüche,
**dadurch gekennzeichnet, dass** die Aushärtung des Materials mittels eines Laser- oder Elektronenstrahls erzielt wird, der über die auszuhärtenden Bereiche geführt wird und die Intensität der Strahlung in einem ersten Bereich des Produkts gegenüber einem zweiten Bereich verändert wird, um die Korngröße in dem ersten Bereich gegenüber dem zweiten Bereich zu beeinflussen.

5. Verfahren nach Anspruch 4,
**dadurch gekennzeichnet, dass** die Intensität der Strahlung verändert wird, indem die Strahlungsquellenleistung, der Durchmesser des Strahls im Bearbeitungsbereich, insbesondere im Fokus und/oder die Verfahrgeschwindigkeit zwischen Strahl und auszuhärtendem Material verändert wird/werden.

6. Verfahren nach Anspruch 4,
**dadurch gekennzeichnet, dass** die Intensität der Strahlung erhöht wird, insbesondere indem die Strahlungsquellenleistung erhöht wird und/oder der Durchmesser des Strahls im Bearbeitungsbereich, insbesondere im Fokus und/oder die Verfahrgeschwindigkeit zwischen Strahl und auszuhärtendem Materials verringert wird*l*werden, um die Korngröße in einem ersten Bereich des Produkts gegenüber dem zweiten Bereich zu beeinflussen.

7. Verfahren nach einem der vorhergehenden Ansprüche,
**dadurch gekennzeichnet, dass** in einem ersten Bereich des Produkts mit höherer Wärmeleitung als in einem zweiten Bereich, insbesondere
- in einem ersten Bereich mit größerer Wandstärke des Produkts und/oder
- in einem ersten Bereich, der in Kontakt mit einer Platte steht, auf der das Bauteil aufgebaut wird, und/oder
- in einem ersten Bereich eines Überhangs des Produkts zumindest ein Verfahrensparameter gegenüber dem zweiten Bereich verändert wird, insbesondere die Intensität der Strahlung und/oder die Schichtdicke im ersten Bereich erhöht wird um die Korngröße zu beeinflussen.

8. Verfahren nach einem der vorhergehenden Ansprüche,
**dadurch gekennzeichnet, dass** zumindest ein Verfahrensparameter anhand der geometrischen Daten des Produkts in einem ersten Bereich des Produkts gegenüber einem zweiten Bereich verändert wird, um die Korngröße in dem ersten Bereich etwa konstant zu dem zweiten Bereich zu halten.

9. Verfahren nach einem der vorhergehenden Ansprüche 1-7,
**dadurch gekennzeichnet, dass** der zumindest eine Verfahrensparameter verändert wird, um die Korngröße bzw. der Komgrenzenoberflächen in einem ersten Bereich des Produkts gegenüber dem zweiten Bereich zu verändern.

10. Verfahren nach Anspruch 9,
**dadurch gekennzeichnet, dass** im ersten Bereich die Schichtdicke erhöht wird und/oder die Intensität der Strahlung erhöht wird, um die Korngröße bzw. der Komgrenzenoberflächen in einem ersten Bereich des Produkts gegenüber dem zweiten Bereich zu erhöhen.

11. Verfahren nach einem der vorhergehenden Ansprüche,
**dadurch gekennzeichnet, dass** der zumindest eine Verfahrensparameter verändert wird, um die Größe zumindest-einer Fehlstelle zu verringern.

12. Verfahren nach Anspruch 11,
**dadurch gekennzeichnet, dass** im ersten Bereich die Schichtdicke verringert wird und/oder die Strahlungsintensität und/oder die Verfahrgeschwindigkeit erhöht wird, um im ersten Bereich zu verhindern, dass sich Fehlstellen aus unlöslichen Schmelzeverunreinigungen, die in der Schmelze oder während des Abkühlens ausfallen, zu größeren Fehlstellen verbinden.

13. Verfahren nach Anspruch 11,
**dadurch gekennzeichnet, dass** im ersten Bereich die Schichtdicke erhöht wird und/oder die Strahlungsintensität und/oder die Verfahrgeschwindigkeit verringert wird, um im ersten Bereich zu verhindern, dass sich Fehlstellen aus löslichen Schmelzeverunreinigungen zu größeren Fehlstellen verbinden.

14. Vorrichtung zum schichtweisen Herstellen eines Produkts, umfassend:
a. Mittel zum Auftragen einer Schicht eines aushärtbaren Materials, wobei beispielsweise die Verfahrensparameter Schichtdicke, Schichtmaterial einstellbar sind,
b. Mittel zum selektiven Aushärten von vorbestimmten Bereichen der aufgetragenen Schicht anhand der geometrischen Daten des Produkts,
c. Steuerungsmittel zum Einstellen der Verfahrensparameter für Art und Höhe des Energieeintrags,
**dadurch gekennzeichnet, dass** die Steuerungsmittel ausgebildet sind, um zumindest einen Verfahrensparameter während des Herstellvorgangs zu verändern, um die bei der Herstellung des Produkts erzeugte Korngröße in einem ersten Bereich des Produkts gegenüber einem zweiten Bereich des Produkts zu beeinflussen, wobei unter der Korngröße die Größe der Kristalle eines metallischen Produkts verstanden wird.

15. Vorrichtung nach Anspruch 14,
**dadurch gekennzeichnet, dass** die Steuerungsmittel ausgebildet sind, um den zumindest einen Verfahrensparameter in Abhängigkeit der geometrischen Daten des Produkts zu verändern.

16. Vorrichtung nach einem der vorhergehenden Ansprüche 14 bis 15,
**dadurch gekennzeichnet, dass** die Mittel zum Auftragen der Schicht ausgebildet sind, um das Material in einem ersten Bereich des Produkts mit einer anderen Schichtdicke aufzutragen als in einem zweiten Bereich, um die Korngröße im ersten Bereich gegenüber dem zweiten Bereich zu beeinflussen.

17. Vorrichtung nach einem der vorhergehenden Ansprüche 14 bis 16,
**dadurch gekennzeichnet, dass** die Mittel zum selektiven Aushärten eine Strahlungsquelle und Mittel zum Erzeugen einer Relativbewegung zwischen dem Strahl der Strahlungsquelle und der Schicht des auszuhärtenden Materials umfassen und die Steuerungsmittel ausgebildet sind, um die Intensität der Strahlung in einem ersten Bereich des Produkts gegenüber einem zweiten Bereich zu verändern, um die Korngröße in dem ersten Bereich gegenüber dem zweiten Bereich zu beeinflussen.

18. Vorrichtung nach Anspruch 17,
**dadurch gekennzeichnet, dass** die Steuerungsmittel ausgebildet sind, um die Strahlungsquellenleistung, den Durchmesser des Strahls im Fokus und/oder die Verfahrgeschwindigkeit zwischen Strahl und auszuhärtendem Material zu verändern.

19. Vorrichtung nach einem der vorhergehenden Ansprüche 14 bis 18,
**dadurch gekennzeichnet, dass** die Steuerungsmittel ausgebildet sind, um in einem ersten Bereich des Produkts mit höherer Wärmeleitung als in einem zweiten Bereich, insbesondere in einem ersten Bereich mit größerer Wandstärke des Produkts und/oder in einem ersten Bereich, der in Kontakt mit einer Platte steht, auf der das Bauteil aufgebaut wird, und/oder in einem ersten Bereich eines Überhangs des Produkts zumindest einen Verfahrensparameter gegenüber dem zweiten Bereich zu verändern.

20. Verwendung der Vorrichtung nach einem der vorhergehenden Ansprüche 14 bis 19 zum Herstellen eines teilweisen oder vollständigen Zahnersatzes.

21. Verfahren nach einem der vorhergehenden Ansprüche 1 bis 10 zum Herstellen eines teilweisen oder vollständigen Zahnersatzes.

## Claims

1. Process for manufacturing a product in layers, comprising the steps:
a. application of a layer of a curable material, wherein, for example, the layer thickness and layer material process parameters are adjustable,
b. selective curing of predetermined areas of the applied layer based on the geometric data of the product, wherein, for example, the process parameters for the type and level of energy input are adjustable,
c. repetition of steps a) and b) until the geometry of the product as a cured material has been created,
d. removal of the non-cured material,
**characterised in that** at least one process parameter is changed during the manufacturing process in order to influence the particle size produced in manufacturing the product in a first area of the product with regard to a second area of the product, wherein by particle size is understood the size of the crystals of a metallic product.

2. Process according to claim 1,
**characterised in that** the at least one process parameter is changed as a function of the geometric data of the product.

3. Process according to one of the preceding claims,
**characterised in that** the material is applied in a first area of the product with a different layer thickness than in a second area in order to influence the particle size in the first area with regard to the second area.

4. Process according to one of the preceding claims,
**characterised in that** curing of the material is achieved by means of a laser or electron beam which is passed over the areas to be cured and the intensity of the radiation is changed in a first area of the product with regard to a second area in order to influence the particle size in the first area with regard to the second area.

5. Process according to claim 4,
**characterised in that** the intensity of the radiation is changed **in that** the radiation source power, the diameter of the beam in the processing area, in particular in the focus, and/or the traverse rate between the beam and the material to be cured is/are changed.

6. Process according to claim 4,
**characterised in that** the intensity of the radiation is increased, in particular **in that** the radiation source power is increased and/or the diameter of the beam in the processing area, in particular in the focus, and/or the traverse rate between the beam and the material to be cured is/are reduced in order to influence the particle size in a first area of the product with regard to the second area.

7. Process according to one of the preceding claims,
**characterised in that** in a first area of the product with a higher heat conduction than in a second area, in particular
- in a first area with a greater wall thickness of the product and/or
- in a first area that is in contact with a plate on which the component is assembled, and/or
- in a first area of an overhang of the product at least one process parameter is changed with regard to the second area, in particular the intensity of the radiation and/or the layer thickness in the first area is increased in order to influence the particle size.

8. Process according to one of the preceding claims,
**characterised in that** at least one process parameter is changed based on the geometric data of the product in a first area of the product with regard to a second area in order to keep the particle size in the first area approximately consistent with the second area.

9. Process according to one of the preceding claims 1 - 7,
**characterised in that** the at least one process parameter is changed in order to change the particle size or the particle boundary surface areas in a first area of the product with regard to the second area.

10. Process according to claim 9,
**characterised in that** in the first area, the layer thickness is increased and/or the intensity of the radiation is increased in order to increase the particle size or the particle boundary surface areas in a first area of the product with regard to the second area.

11. Process according to one of the preceding claims,
**characterised in that** the at least one process parameter is changed in order to reduce the size of at least one defect.

12. Process according to claim 11,
**characterised in that** in the first area, the layer thickness is reduced and/or the radiation intensity and/or the traverse rate is increased in order to prevent, in the first area, defects due to insoluble melt impurities that are produced in the melt or during cooling from combining to form larger defects.

13. Process according to claim 11,
**characterised in that** in the first area, the layer thickness is increased and/or the radiation intensity and/or the traverse rate is reduced in order to prevent, in the first area, defects due to soluble melt impurities from combining to form larger defects.

14. Device for manufacturing a product in layers, comprising:
a. means for applying a layer of a curable material, wherein, for example, the layer thickness and layer material process parameters are adjustable,
b. means for selective curing of predetermined areas of the applied layer based on the geometric data of the product,
c. control means for adjusting the process parameters for the type and level of energy input,
**characterised in that** the control means are developed in order to change at least one process parameter during the manufacturing process, in order to influence the particle size produced in manufacturing the product in a first area of the product with regard to a second area of the product, wherein by particle size is understood the size of the crystals of a metallic product.

15. Device according to claim 14,
**characterised in that** the control means are developed in order to change the at least one process parameter as a function of the geometric data of the product.

16. Device according to one of the preceding claims 14 to 15,
**characterised in that** the means for applying the layer are developed in order to apply the material in a first area of the product with a different layer thickness to that in a second area, in order to influence the particle size in the first area with regard to the second area.

17. Device according to one of the preceding claims 14 to 16,
**characterised in that** the means for selective curing comprise a radiation source and means for creating a relative movement between the beam of the radiation source and the layer of the material to be cured, and the control means are developed in order to change the intensity of the radiation in a first area of the product with regard to a second area in order to influence the particle size in the first area with regard to the second area.

18. Device according to claim 17,
**characterised in that** the control means are developed in order to change the radiation source power, the diameter of the beam in the focus and/or the traverse rate between the beam and the material to be cured.

19. Device according to one of the preceding claims 14 to 18,
**characterised in that** the control means are developed in order to change, in a first area of the product with a higher heat conduction than in a second area, in particular in a first area with a greater wall thickness of the product and/or in a first area that is in contact with a plate on which the component is assembled, and/or in a first area of an overhang of the product, at least one process parameter with regard to the second area.

20. Use of the device according to one of the preceding claims 14 to 19 for manufacturing a partial or complete set of dentures.

21. Process according to one of the preceding claims 1 to 10 for manufacturing a partial or complete set of dentures.

## Revendications

1. Procédé pour la fabrication par couches d'un produit comprenant les étapes :
a. application d'une couche d'un matériau durcissable, où par exemple les paramètres du procédé épaisseur de la couche, matériau de la couche sont réglables,
b. durcissement sélectif de domaines prédéterminés de la couche appliquée à l'aide des données géométriques du produit, où par exemple les paramètres du procédé pour le type et l'ampleur de l'apport d'énergie sont réglables,
c. répétition des étapes a) et b) jusqu'à ce que la géométrie du produit comme matériau durci soit formée,
d. retrait du matériau non durci,
**caractérisé en ce qu'**au moins un paramètre du procédé est modifié pendant le processus de fabrication, pour influencer la taille des grains produite pendant la fabrication du produit dans un premier domaine du produit par rapport à un second domaine du produit, où par taille des grains on entend la taille des cristaux d'un produit métallique.

2. Procédé selon la revendication 1,
**caractérisé en ce que** le au moins un paramètre du procédé est modifié en fonction des données géométriques du produit.

3. Procédé selon l'une des revendications précédentes,
**caractérisé en ce que** le matériau est appliqué dans un premier domaine du produit en une autre épaisseur de la couche que dans un second domaine, pour influencer la taille des grains dans le premier domaine par rapport au second domaine.

4. Procédé selon l'une des revendications précédentes,
**caractérisé en ce que** le durcissement du matériau est obtenu au moyen d'un rayon laser ou électronique, qui est conduit au-dessus des domaines à durcir et l'intensité du rayonnement est modifiée dans un premier domaine du produit par rapport à un second domaine, pour influencer la taille des grains dans le premier domaine par rapport au second domaine.

5. Procédé selon la revendication 4,
**caractérisé en ce que** l'intensité du rayonnement est modifiée par le fait que la puissance de la source de rayonnement, le diamètre du rayon dans le domaine de traitement, en particulier au foyer et/ou la vitesse d'avance entre le rayon et le matériau à durcir est/sont modifiés.

6. Procédé selon la revendication 4,
**caractérisé en ce que** l'intensité du rayonnement est augmentée, en particulier par le fait que la puissance de la source de rayonnement est augmentée et/ou le diamètre du rayon dans le domaine de traitement, en particulier au foyer et/ou la vitesse d'avance entre le rayon et le matériau à durcir est/sont réduits, pour influencer la taille des grains dans un premier domaine du produit par rapport au second domaine.

7. Procédé selon l'une des revendications précédentes,
**caractérisé en ce que**, dans un premier domaine du produit à plus grande conduction thermique que dans un second domaine, en particulier
- dans un premier domaine à plus grande épaisseur de paroi du produit et/ou
- dans un premier domaine qui est en contact avec une plaque sur laquelle est formée la pièce, et/ou
- dans un premier domaine d'un surplomb du produit
au moins un paramètre du procédé est modifié par rapport au second domaine, en particulier l'intensité du rayonnement et/ou l'épaisseur de la couche est augmentée dans le premier domaine pour influencer la taille des grains.

8. Procédé selon l'une des revendications précédentes,
**caractérisé en ce qu'**au moins un paramètre du procédé est modifié à l'aide des données géométriques du produit dans un premier domaine du produit par rapport à un second domaine, pour maintenir la taille des grains dans le premier domaine sensiblement constante par rapport au second domaine.

9. Procédé selon l'une des revendications 1-7 précédentes,
**caractérisé en ce que** le au moins un paramètre du procédé est modifié pour modifier la taille des grains ou les surfaces des joints de grains dans un premier domaine du produit par rapport au second domaine.

10. Procédé selon la revendication 9,
**caractérisé en ce que**, dans le premier domaine, l'épaisseur de la couche est augmentée et/ou l'intensité du rayonnement est augmentée, pour augmenter la taille des grains ou les surfaces des joints de grains dans un premier domaine du produit par rapport au second domaine.

11. Procédé selon l'une des revendications précédentes,
**caractérisé en ce que** le au moins un paramètre du procédé est modifié pour réduire la taille d'au moins un défaut.

12. Procédé selon la revendication 11,
**caractérisé en ce que** dans le premier domaine l'épaisseur de la couche est réduite et/ou l'intensité du rayonnement et/ou la vitesse d'avance est augmentée, pour éviter dans le premier domaine que des défauts provenant d'impuretés de la masse fondue insolubles, qui précipitent dans la masse fondue ou pendant le refroidissement, se joignent en défauts de plus grande taille.

13. Procédé selon la revendication 11,
**caractérisé en ce que** dans le premier domaine l'épaisseur de la couche est augmentée et/ou l'intensité du rayonnement et/ou la vitesse d'avance est réduite, pour éviter dans le premier domaine que des défauts provenant d'impuretés de la masse fondue solubles se joignent en défauts de plus grande taille.

14. Dispositif pour la fabrication par couches d'un produit comprenant:
a. des moyens pour l'application d'une couche d'un matériau durcissable, où par exemple les paramètres du procédé épaisseur de la couche, matériau de la couche sont réglables,
b. des moyens pour le durcissement sélectif de domaines prédéterminés de la couche appliquée à l'aide des données géométriques du produit,
c. des moyens de commande pour le réglage des paramètres du procédé pour le type et l'ampleur de l'apport d'énergie,
**caractérisé en ce que** les moyens de commande sont agencés pour modifier au moins un paramètre du procédé pendant le processus de fabrication, pour influencer la taille des grains produite pendant la fabrication du produit dans un premier domaine du produit par rapport à un second domaine du produit, où par taille des grains on entend la taille des cristaux d'un produit métallique.

15. Dispositif selon la revendication 14,
**caractérisé en ce que** les moyens de commande sont agencés pour modifier le au moins un paramètre du procédé en fonction des données géométriques du produit.

16. Dispositif selon l'une des revendications 14 à 15 précédentes,
**caractérisé en ce que** les moyens pour l'application de la couche sont agencés pour appliquer le matériau dans un premier domaine du produit en une autre épaisseur de la couche que dans un second domaine, pour influencer la taille des grains dans le premier domaine par rapport au second domaine.

17. Dispositif selon l'une des revendications 14 à 16 précédentes,
**caractérisé en ce que** les moyens pour le durcissement sélectif comprennent une source de rayonnement et des moyens pour produire un mouvement relatif entre le rayon de la source de rayonnement et la couche du matériau à durcir et les moyens de commande sont agencés pour modifier l'intensité du rayonnement dans un premier domaine du produit par rapport à un second domaine, pour influencer la taille des grains dans le premier domaine par rapport au second domaine.

18. Dispositif selon la revendication 17,
**caractérisé en ce que** les moyens de commande sont agencés pour modifier la puissance de la source de rayonnement, le diamètre du rayon au foyer et/ou la vitesse d'avance entre le rayon et le matériau à durcir.

19. Dispositif selon l'une des revendications 14 à 18 précédentes,
**caractérisé en ce que** les moyens de commande sont agencés pour modifier, dans un premier domaine du produit à plus grande conduction thermique que dans un second domaine, en particulier dans un premier domaine à plus grande épaisseur de paroi du produit et/ou dans un premier domaine qui est en contact avec une plaque sur laquelle est formée la pièce, et/ou dans un premier domaine d'un surplomb du produit, au moins un paramètre du procédé par rapport au second domaine.

20. Utilisation du dispositif selon l'une des revendications 14 à 19 précédentes pour la fabrication d'une prothèse dentaire partielle ou totale.

21. Procédé selon l'une des revendications 1 à 10 précédentes pour la fabrication d'une prothèse dentaire partielle ou totale.
